# EUROPÄISCHE PATENTANMELDUNG

(11) **EP 0 777 315 A2**
(43) Veröffentlichungstag der Anmeldung: **04.06.1997**
(21) Anmeldenummer: 96118981.8
(22) Anmeldetag: 27.11.1996
(51) Int. Cl.: H02K 33/12

(54) **Orbitalschweissmaschine**

(30) Priorität: 01.12.1995 DE 19545132
(71) Anmelder: BRANSON ULTRASCHALL Niederlassung der EMERSON TECHNOLOGIES GmbH & CO., D-63128 Dietzenbach (DE)
(72) Erfinder: Muhr, Emil, 63864 Glattbach (DE)
(74) Vertreter: Hauck, Hans, Dipl.-Ing.

(57) **Zusammenfassung**

Die Erfindung betrifft eine Reibschweißmaschine, bei der das bewegliche Teil mit Stabfedern an einem Gehäuse befestigt und gegenüber einem gehäusefesten Teil in einer orbitalen Bewegung angetrieben ist. An den Teilen sind die miteinander zu verschweißenden Werkstücke angeordnet. Ein elektromagnetischer Antrieb für den beweglichen Teil ist vom Rotor und Stator eines Elektromotors vom Trommelläufertyp gebildet. In den Nuten des Stators befindet sich eine Wicklung, die ein rotierendes, einseitig den Rotor anziehendes magnetisches Feld erzeugt, so daß der Rotor eine orbitale Bewegung ausführt. Vorteilhaft sind insbesondere die leichte Verfügbarkeit der handelsüblichen Komponenten für den Antrieb, die geringeren Kosten des Systems, der geringere Platzbedarf, hohe Kräfte des Antriebs und die Möglichkeit, mit einer vielpoligen Ausführung einen besseren Rundlauf zu erzielen.

## Beschreibung

Die Erfindung betrifft eine Reibschweißmaschine gemäß dem Oberbegriff des Patentanspruchs 1.

In EP 0 504 494 ist eine Reibschweißmaschine mit einem elektromagnetischen Antrieb geschildert, mit dem eine an Stabfedern befestigte Schwingerplatte in eine lineare Vibrationsbewegung oder eine orbitale Bewegung versetzt wird. In einer Halterung der Schwingerplatte sitzt ein für gewöhnlich aus Kunststoff ge-fertigtes Werkstück, das mit einem gehäusefest eingespannten Werkstück durch Reibschweißen unter Aufbringen von Druck verschweißt werden soll. Unter orbitaler Bewegung wird eine kreisförmige oder auch elliptische Bewegung verstanden, bei der das Werkstück mit einer bestimmten Amplitude um den im Ruhezustand der Schwingerplatte definierten Mittelpunkt wandert. Es hat sich gezeigt, daß solche orbitale Schweißmaschinen erhebliche Vorteile bieten im Vergleich zu Vibrationsschweißmaschinen, bei denen die lineare Schwingbewegung jeweils am Ende der Schwingamplitude zum Stillstand kommt und umgekehrt wird, oder im Vergleich zu Rotationsschweißmaschinen, bei denen sich die Drehgeschwindigkeit abhängig vom Radius verändert und mit denen lediglich rotationssymmetrische Werkstücke verschweißt werden können.

Der aus EP 0 504 494 bekannte elektromagnetische Antrieb für die Schwingerplatte besteht aus einem Stator mit ausgeprägten Polen, auf denen die Wicklungen untergebracht sind und einem innerhalb des Stators auf der Schwingerplatte befestigten polygonalen Anker. Die Stirnseiten von Anker und Polen sind also jeweils plan ausgeführt. Anker und Stator bestehen aus geschichteten Dynamoblechen.

Die der Erfindung zugrunde liegende Aufgabe besteht darin, eine Reibschweißmaschine mit einem Antrieb zu schaffen, der eine vereinfachte Bauweise aufweist und geringere Kosten mit sich bringt.

Die genannte Aufgabe ist erfindungsgemäß mit den Merkmalen des Patentanspruchs 1 gelöst.

Erfindungsgemäß werden so für den elektromagnetischen Antrieb der Reibschweißmaschine handelsübliche Elektromotorkomponenten verwendet, nämlich ein trommelförmiger Rotor aus geschichteten Dynamoblechen, vorzugsweise vom Käfigläufertyp, und ein innen genuteter Stator, wie sie als Massenprodukte beim Bau von Asynchronmotoren billig verfügbar sind. Da der Rotor keine Rotationsbewegung ausführen soll, sondern eine Orbitalbewegung, also eine schwingende Bewegung, muß die Statorwicklung im Gegensatz zur üblichen Wicklung eines Asynchronmotors so verändert werden, daß ein umwanderndes magnetisches Feld entsteht, von dem der an den Stabfedern gehaltene Rotor einseitig angezogen wird. Eine weitere Abänderung gegenüber dem üblichen Elektromotor besteht darin, daß der Luftspalt zwischen Rotor und Stator größer als die gewünschte Schwingungsamplitude sein muß. Durch die Verwendung handelsüblicher Motorkomponenten läßt sich eine wesentliche Kostensenkung des Antriebes erreichen, sowie eine kleinere Baugröße als bei einem Antrieb mit ausgeprägten Polen und einem polygonal gestalteten Anker. Ferner ist es bei dem erfindungsgemäßen Antrieb leicht möglich, die Polzahl zu erhöhen und damit den Rundlauf zu verbessern.

Vorteilhafte Weiterbildungen der Erfindung sind in den Unteransprüchen gekennzeichnet, die sich auf mögliche Wicklungsschemen und eine einfache Bauausführung richten.

Ein Ausführungsbeispiel der Erfindung ist nachstehend anhand der Zeichnung näher erläutert. Es zeigt:

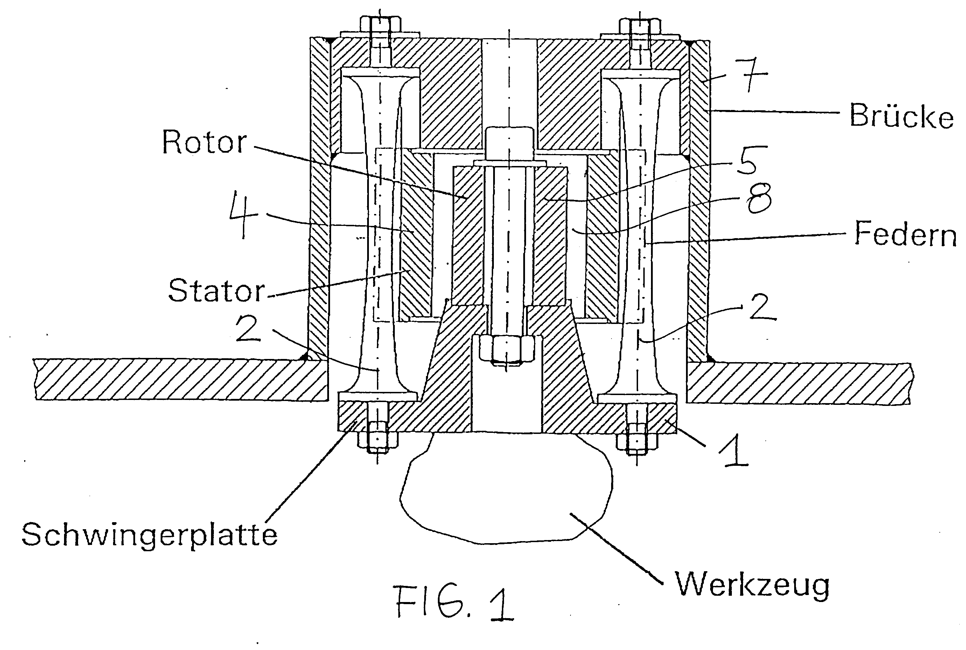

- Fig. 1: einen Schnitt durch einen Schwingkopfantrieb einer Reibschweißmaschine,
- Fig. 2: einen Schnitt durch den Rotorstator des Antriebes mit Angabe der Stromflußrichtung und
- Fign. 3a und 3b: zwei unterschiedliche Wicklungsschemen zum Erzielen einer Orbitalbewegung.

Eine Schwingerplatte 1 ist über mehrere am Umfang beabstandete Stabfedern 2 an einer gehäusefesten Trägerplatte 3 befestigt. In der Darstellung sind nur zwei Federn sichtbar. An der Schwingerplatte 1 ist eine Halterung (nicht dargestellt) für ein ebenfalls nicht dargestelltes erstes Werkstück befestigt. Eine gehäusefeste Auflage mit einer Halterung für das zweite Werkstück befindet sich unterhalb der Schwingerplatte und ist verschiebbar auf das erste Werkstück zu angeordnet, so daß sie angepreßt werden kann, um an den aufschmelzenden Fügeflächen der beiden Werkstücke während des Schweißens eine Fügekraft zu erzielen. Hierzu sind beispielsweise Einzelheiten aus US-PS 3 920 504 zu entnehmen.

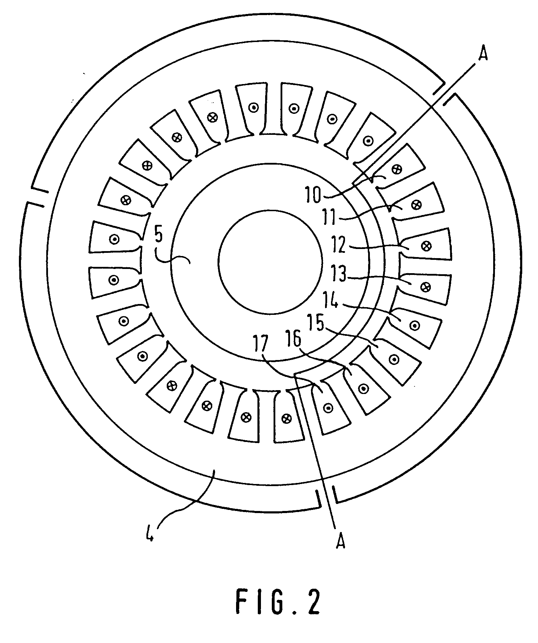

Innerhalb der Stabfedern 2 ist ein Stator 4 stirnseitig an der Unterseite der Trägerplatte 3 befestigt. Der Stator 4 ist zylindrisch und an seinem Innenumfang mit den aus Fig. 2 ersichtlichen Nuten 10, 11, 12 usw. versehen, in denen die Wicklungen untergebracht sind. Innerhalb des Stators 4 liegt ein Rotor 5 vom Trommelläufertyp, der in der dargestellten Weise mit einer Schraubverbindung 6 stirnseitig auf der Oberseite der Schwingerplatte 1 befestigt ist. Die Trägerplatte 3 ist an einer Brücke 7 bzw. einem oberen Joch der Reibschweißmaschine befestigt. Der Luftspalt ist mit 8 bezeichnet.

Bei der vom Antrieb erzwungenen orbitalen Bewegung des Rotors 5 und damit der Schwingerplatte 1 werden die Stabfedern 2 ausgelenkt. Sobald während der Schweißphase der Werkstoff an den Fügeflächen der beiden miteinander zu verschweißenden Werkstücke aufschmilzt, wird der Antrieb abgeschaltet und die Federn führen die Schwingerplatte in die dargestellte Ruhelage zurück, so daß die Werkstücke in einer genau definierten Lage zueinander verschweißt werden.

In Fig. 2 ist ein Schnitt durch den am zylindrischen Innenumfang mit Nuten 10 usw versehenen Stator dargestellt. In dem angegebenen Beispiel besitzt der Stator insgesamt 24 Nuten, von denen jeweils acht Nuten mit Leitern besetzt sind, die zu einem Wicklungsstrang gehören, so daß sich insgesamt drei Wicklungsstränge ergeben, von denen jeder an eine Phase eines dreiphasigen Wechselstroms angeschlossen ist. Dabei muß die Wicklung, also die Leiterführung in den Nuten, so ausgebildet sein, daß die Krafteinbringung von Seiten des magnetischen Feldes immer nur einseitig erfolgt. Dadurch wird der Rotor aus seiner Mittellage ausgelenkt und hat das Bestreben, sich der erregten Statorseite zu nähern. In Fig. 2 handelt es sich also um ein dreipoliges System. Jede Phase ist in zwei Nutgruppen unterteilt, bei denen die Nuten nebeneinander liegen und die Leiter in diesen Nuten im entgegengesetzten Sinn vom Strom durchflossen sind. Die Stromflußrichtung der Nutgruppen der dreiphasigen Wicklung ist in Fig. 2 eingezeichnet. Die Stromflußrichtung ist alternierend.

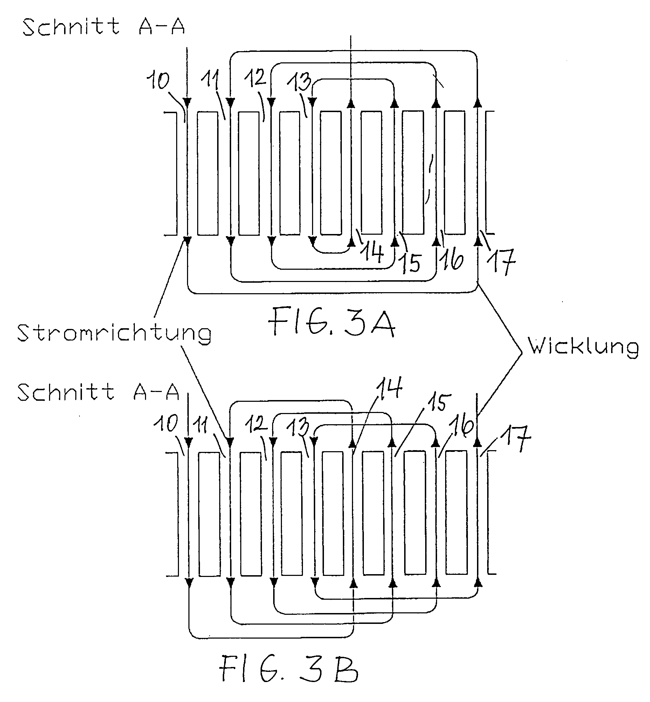

In Fig. 3A ist ein Wickelschema für eine Phase eines dreiphasigen Wechselstroms entsprechend dem Schnitt A-A in Fig. 2 dargestellt. Dabei gehören die Nuten 10 bis 13 zur ersten Nutgruppe, deren Leiter vom Strom in der mit Pfeilen angegebenen Richtung durchflossen sind, und die Nuten 14 bis 17 zur zweiten Nutgruppe der Phase, die vom Strom in Gegenrichtung durchflossen wird. Die Verbindung der Leiter auf beiden Statorseiten erfolgt in der in Fig. 3A dargestellten Weise, während Fig. 3B eine abgeänderte, jedoch gleichwertige Verbindung zeigt. In beiden Fällen kehrt sich so der Stromfluß in den aus einer Vielzahl nebeneinander liegenden Nuten bestehenden Nutgruppen alternierend um und ergibt sich damit eine einseitige Anziehungskraft auf den Rotor. Da drei derartige Wicklungsstränge am Statorumfang verteilt in den Nuten angeordnet und am Drehstrom angeschlossen sind, ergibt sich ferner ein magnetisches Drehfeld, so daß die einseitige Anziehung des Rotors rotiert und damit der Rotor die gewünschte Orbitalbewegung ausführt.

Selbstverständlich lassen sich Nutzahl und Polzahl verändern, so daß bei höherer Polzahl der Rundlauf der Orbitalbewegung verbessert ist. Im einfachsten Fall besteht der Rotor aus geschichteten Dynamoblechen, kann aber auch mit einer Käfigläuferwicklung versehen sein.

## Patentansprüche

1. Reibschweißmaschine, bei der das bewegliche Teil mit Stabfedern an einem Gehäuse befestigt und gegenüber einem gehäusefesten Teil in einer orbitalen Bewegung angetrieben ist, an den Teilen die miteinander zu verschweißenden Werkstücke und aneinander andrückbar sind, und bei der ein elektromagnetischer Antrieb für den beweglichen Teil mit einem gehäusefesten Stator mit Wicklungen und einem innerhalb des Stators angeordneten Anker vorgesehen ist und der Anker sowie der Stator aus geschichteten Dynamoblechen bestehen,
dadurch gekennzeichnet, daß der elektromagnetische Antrieb vom Rotor (5) und Stator (4) eines Elektromotors vom Trommelläufertyp gebildet ist, der Luftspalt zwischen dem Rotor und dem Stator größer als die Schwingungsamplitude der orbitalen Bewegung ist und in den Nuten des Stators (4) eine Wicklung eingebracht ist, die ein rotierendes magnetisches Feld unter einer einseitigen Anziehung des Rotors erzeugt.

2. Reibschweißmaschine nach Anspruch 1, bei der der elektromagnetische Antrieb an dreiphasigem Wechselstrom angeschlossen ist, dadurch gekennzeichnet, daß die Leiter des Wicklungsstranges in jeweils nebeneinander liegenden Nuten zweier in Umfangsrichtung aufeinanderfolgender Nutgruppen (10 usw., 14 usw.) angeordnet sind und die Stromrichtung der Leiter in den beiden Nutgruppen entgegengesetzt ist.

3. Reibschweißmaschine nach Anspruch 2, dadurch gekennzeichnet, daß auf der einen Statorseite jeweils der aus der ersten Nut (10) der ersten Nutgruppe austretende Leiter mit dem Leiter in der letzten Nut (17)der zweiten Nutgruppe, der aus der zweiten Nut (11) der ersten Nutgruppe austretende Leiter mit dem Leiter in der vorletzten Nut (16) der zweiten Nutgruppe usw. verbunden ist und auf der anderen Statorseite der aus der letzten Nut (17) der zweiten Nutgruppe austretende Leiter mit dem Leiter in der zweiten Nut (11) der ersten Nutgruppe, der aus der vorletzten Nut (16) der zweiten Nutgruppe austretende Leiter mit dem Leiter in der dritten Nut (12) der ersten Nutgruppe usw. verbunden ist.

4. Reibschweißmaschine nach Anspruch 2, dadurch gekennzeichnet, daß auf der einen Statorseite der aus der ersten Nut (10) der ersten Nutgruppe austretende Leiter mit dem Leiter in der ersten Nut (14) der zweiten Nutgruppe, der aus der zweiten Nut (11) der ersten Nutgruppe austretende Leiter mit dem Leiter in der zweiten Nut (15) der zweiten Nutgruppe usw. verbunden ist und auf der anderen Statorseite der aus der zweiten Nut (11) der ersten Nutgruppe austretende Leiter mit dem Leiter in der zweiten Nut (15) der zweiten Nutgruppe, der aus der dritten Nut (12) der ersten Nutgruppe austretende Leiter mit dem Leiter in der dritten Nut (16) der zweiten Nutgrupp usw. verbunden ist.

5. Reibschweißmaschine nach einem der Ansprüche 1 bis 4, dadurch gekennzeichnet, daß die Polzahl der Wicklung größer oder kleiner als dreipolig ist.

6. Reibschweißmaschine nach einem der Ansprüche 1 bis 5, dadurch gekennzeichnet, daß die Stabfedern (2) an der Unterseite einer gehäusefesten Trägerplatte (3) befestigt sind und innerhalb der Stabfedern der Stator (4) mit seiner Stirnseite an der Unterseite der Trägerplatte befestigt ist, und daß an den freien Enden der Stabfedern eine Schwingerplatte (2) befestigt ist, an der der Rotor (5) des Antriebs befestigt ist.
